# EUROPEAN PATENT SPECIFICATION

(11) **EP 3 254 943 B1**
(45) Date of publication and mention of the grant of the patent: **14.10.2020**
(21) Application number: 15880825.3
(22) Date of filing: 28.04.2015
(51) Int. Cl.: B62M 3/08, B62K 15/00

(54) **QUICK-MOUNT CRANK-PEDAL MECHANISM FOR BICYCLE FOR CHILDREN**
SCHNELLMONTAGE-KURBELPEDALMECHANISMUS FÜR KINDERFAHRRAD
MÉCANISME DE MANIVELLE-PÉDALE À MONTAGE RAPIDE POUR UNE BICYCLETTE POUR ENFANTS

(30) Priority: 05.02.2015 CN 201510058349
(43) Date of publication of application: 13.12.2017
(73) Proprietor: Royalbaby Cycle Beijing Co., Ltd., Beijing 100195 (CN)
(72) Inventor: TONG, Tony, Beijing 100195 (CN)
(74) Representative: Dr. Gassner & Partner mbB
(86) International application number: PCT/CN2015/077661
(87) International publication number: WO 2016/123870

(56) References cited:
- EP-A1- 2 456 657
- CN-A- 101 508 323
- CN-U- 203 681 819
- CN-U- 203 854 812
- KR-A- 20110 137 153
- US-A- 5 460 455
- US-A1- 2003 197 346
- US-B1- 6 708 998

## Description

### TECHNICAL FIELD

The present disclosure relates to a quick-mount crank-pedal mechanism for a children bicycle.

### BACKGROUND

Since a split design is used in the existing art, link structures are relatively complex and need lots of operation procedures. Moreover, a tip of a crank is easy to pierce a carton during transportation. Therefore, a pedal mechanism in the existing art has poor firmness, is easily broken, and has potential safety hazards, and the installation thereof is troublesome.

### SUMMARY

In view of the shortcomings in the above-mentioned problems, the present disclosure provides a quick-mount crank-pedal mechanism for a children bicycle.

In order to achieve the above object, the present disclosure provides a quick-mount crank-pedal mechanism for a children bicycle. The quick-mount crank-pedal mechanism is composed of the following two parts: a crank rod and a crank bearing. The crank rod is configured to be fitted with the crank bearing. A spring protrusion is provided at a tip of the crank rod, and a clamping slot is provided on the crank bearing.

Further, the spring protrusion and the clamping slot are fitted with each other.

Further, a thread mechanism is provided on the crank rod, and a nut mechanism is provided in the crank bearing.

The present disclosure has the following beneficial effects: with the present mechanism, the pedal is enabled to be in a usable state quickly without using any tools, thus a customer is free from trouble in installation; the tip of the crank is effectively protected from puncturing through a carton during transportation, thereby reducing potential safety hazards. The present mechanism has many advantages such as eliminating all complicated procedures and misleading, making the consumer free from confusions, and being firmer.

### BRIEF DESCRIPTION OF DRAWINGS

Fig. 1 is an overall schematic diagram showing a quick-mount crank-pedal mechanism for a children bicycle according to the present disclosure;
Fig. 2 is a separated schematic diagram showing a quick-mount crank-pedal mechanism for a children bicycle according to the present disclosure;

List of Reference numerals: 1 crank rod; 2 crank bearing; 3 protrusion; 4 clamping slot.

### DETAILED DESCRIPTION

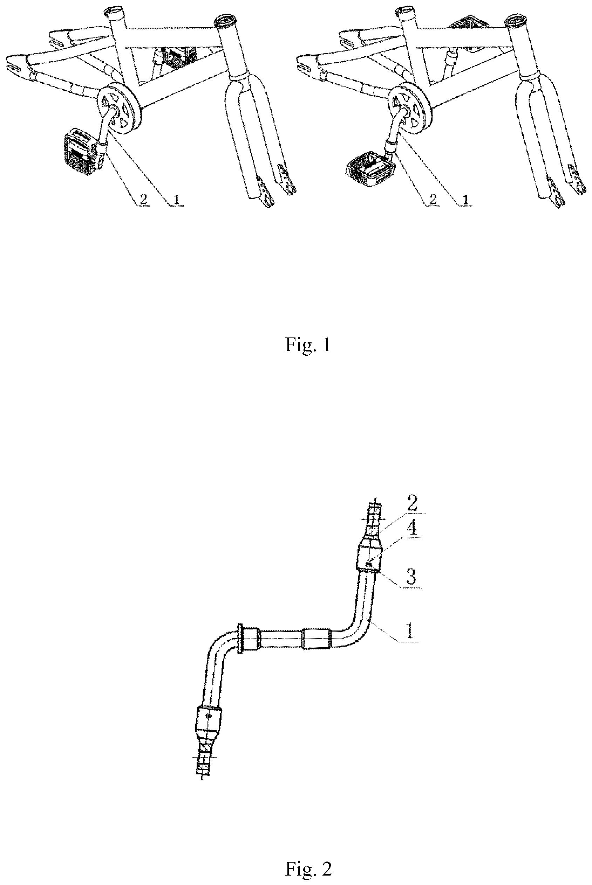

As shown in Fig. 1, the present disclosure relates to a quick-mount crank-pedal mechanism for a children bicycle. The quick-mount crank-pedal mechanism is composed of the following two parts: a crank rod (1) and a crank bearing (2). The crank rod (1) and the crank bearing (2) are fitted with each other. A tip of the crank rod (1) is provided with a spring protrusion (3) which is fitted with a clamping slot (4) provided on the crank bearing (2). Through the present mechanism, the pedal is enabled to be in a usable state quickly without using any tools, thus a customer is free from trouble in installation. Moreover, the tip of the crank is effectively protected from puncturing through a carton, thereby reducing potential safety hazards. The present mechanism has advantages, such as eliminating all complicated procedures and misleading, making the consumers free from confusions, and the present mechanism is firmer.

In specific use, it is only required to rotate the pedal by 90 degrees counterclockwise so as to clamp the spring protrusion (3) provided at the tip of the crank rod (1) into the clamping slot (4) provided on the crank bearing (2). Therefore, it is convenient to use and easy to manipulate, and a regulation effect is good.

The invention is defined by the claims.

## Claims

1. A quick-mount crank-pedal mechanism for a bicycle, comprising:
a crank rod (1);
a crank bearing (2);
a spring protrusion (3), provided at a tip of the crank rod (1); and
a clamping slot (4), provided on the crank bearing (2);
**characterized in that** the tip of the crank rod (1) and the crank bearing (2) are coaxially aligned with a common axis;
a pedal of the bicycle coupled to the crank bearing (2) is rotated by 90 degrees counterclockwise around the common axis so that the spring protrusion (3) is clamped into the clamping slot (4).

2. The quick-mount crank-pedal mechanism according to claim 1, wherein a thread mechanism is provided on the crank rod (1), and a nut mechanism is provided in the crank bearing (2).

## Patentansprüche

1. Schnellmontage-Kurbelpedalmechanismus für ein Fahrrad, umfassend:
eine Tretkurbel (1);
ein Kurbellager (2);
einen Federvorsprung (3), der an einer Spitze der Tretkurbel (1) vorgesehen ist; und
einen Klemmschlitz (4), der an dem Kurbellager (2) vorgesehen ist;
**dadurch gekennzeichnet, dass**
die Spitze der Tretkurbel (1) und das Kurbellager (2) koaxial zu einer gemeinsamen Achse ausgerichtet sind;
wobei ein mit dem Kurbellager (2) gekoppeltes Pedal des Fahrrades um 90 Grad gegen den Uhrzeigersinn um die gemeinsame Achse gedreht ist, so dass der Federvorsprung (3) in den Klemmschlitz (4) geklemmt ist.

2. Schnellmontage-Kurbelpedalmechanismus nach Anspruch 1, wobei an der Tretkurbel (1) ein Gewindemechanismus und im Kurbellager (2) ein Muttermechanismus vorgesehen ist.

## Revendications

1. Mécanisme de manivelle-pédale à montage rapide pour une bicyclette comprenant :
une tige de manivelle (1) ;
un palier de manivelle (2) ;
une partie saillante de ressort (3) ménagée au niveau d'une extrémité de la tige de manivelle (1) ; et
une fente de serrage (4) ménagée sur le palier de manivelle (2) ;
**caractérisé en ce que**
l'extrémité de la tige de manivelle (1) et le palier de manivelle (2) sont alignés de manière coaxiale sur un axe commun ;
une pédale de la bicyclette couplée au palier de manivelle (2) est tournée de 90 degrés dans le sens antihoraire autour de l'axe commun de manière à ce que la partie saillante de ressort (3) soit bloquée dans la fente de serrage (4).

2. Mécanisme de manivelle-pédale à montage rapide selon la revendication 1, en ce qu'un mécanisme de filetage est ménagé sur la tige de manivelle (1) et un mécanisme d'écrou est ménagé dans le palier de manivelle (2).
